# EUROPÄISCHE PATENTSCHRIFT

(11) **EP 1 328 886 B1**
(45) Veröffentlichungstag und Bekanntmachung des Hinweises auf die Patenterteilung: **27.04.2005**
(21) Anmeldenummer: 01971469.0
(22) Anmeldetag: 10.10.2001
(51) Int. Cl.: G06F 17/60

(54) **PROGRAMMLOGIK ZUM VERKAUF VON BERECHTIGUNGEN**
PROGRAM LOGIC FOR SELLING AUTHORIZATIONS
LOGIQUE DE PROGRAMME POUR VENDRE DES AUTORISATIONS

(30) Priorität: 10.10.2000 AT 7512000 U
(43) Veröffentlichungstag der Anmeldung: 23.07.2003
(73) Patentinhaber: T & M Consulting GmbH, 5026 Salzburg (AT)
(72) Erfinder: KOCZNAR, Wolfram, A-6020 Innsbruck (AT); DONHAUSER, Thomas, A-5020 Salzburg (AT); WINDHAGER, Christian, A-5061 Elsbethen (AT)
(74) Vertreter: Gibler, Ferdinand, Dipl.Ing. Dr.
(86) Internationale Anmeldenummer: PCT/AT2001/000324
(87) Internationale Veröffentlichungsnummer: WO 2002/031711

(56) Entgegenhaltungen:
- US-A- 5 239 480
- US-A- 5 732 398
- US-A- 5 764 981
- US-A- 5 797 126
- US-A- 6 094 640

## Beschreibung

Die Erfindung betrifft eine Programmlogik zum Verkauf von Berechtigungen für Veranstaltungen oder dergleichen, insbesondere für Tickets aller Art, wobei die verkaufbaren Berechtigungen in Datenbanken definiert sind, und über das Internet seitens einer Vorverkaufsstelle oder eines Käufers ein Zugriff auf die Datenbank für die Reservierung und / oder den Kauf der Berechtigungen erfolgt.

Es ist eine Vielzahl von Systemen zum Vorverkauf von Tickets bekannt. Solche Systeme verwenden meist zentrale Server, die in einer Datenbank die verkaufbaren Tickets speichern. Beim Verkauf eines Tickets greift dann eine Vorverkaufsstelle über eine geeignete Datenverbindung auf die Datenbank des Servers zu und kennzeichnet das entsprechende Ticket als verkauft. Das Ticket selbst wird zentral ausgedruckt und dem Käufer übersandt.

Modernere Systeme verwenden zur Verbindung zwischen Server und Vorverkaufsstelle das Internet als kostengünstiges Medium. Nachteilig bei all diesen Lösungen ist, dass das Versenden des Tickets vom zentralen Server zum Käufer nach dem eigentlichen Kaufvorgang notwendig ist. Es ist auch schon vorgeschlagen worden, dass die Reservierung in der Datenbank eines zentralen Webservers erfolgt, und dabei entsprechende Ticketdaten zur Vorverkaufstelle übertragen werden. Das Ticket kann so vor Ort ausgedruckt werden. Eine automatische Kontrolle ist so nicht möglich.

Der Stand der Technik Dokument US 5 732 398 A beschreibt eine Programinlogik zum Verkauf von auf Reisen bezogene Produkten auf einer interaktiven elektronischen Basis. Dabei kann der Benutzer eine Reservierung z.B. über das Internet vornehmen, wobei eine Bestätigungsnummer einzugeben ist, um das entsprechende Angebot als reserviert zu kennzeichnen und aus der zentralen Reservierungs-Datenbank zu nehmen. Danach ist es jedoch erforderlich die reservierte Leistung gegebenenfalls mittels Kreditkarte zu bezahien, woraufhin ein Voucher ausgedruckt wird. Dazu sind entsprechende Vorverkaufsstellen vorgesehen

Dokument US 6 094 640 A offenbart em Verfahren zur Aussteifung einer elektronischen Berechtigung, bei dem ein Flugzeugpassagier eine Reservierung durchführt, wobei zunächst über ein Reservierungs-Center das Kreditkarten-Unternehmen den Passagiers benachrichtigt und ein entsprechender Betrag für das Ticket abgebucht wird. Dabei wird vom Computer eine Reservierungsnummer vergeben. Eine vom Passagier verwendete Magnetkarte ermöglicht es, über eine am Abflugschalter eingerichtete Kommunikationsverbindung die Reservierung zu bestatigen, woraufhin der Zutritt zum Flugzeug ermöglicht wird.

Erfindungsgemäß ist nun vorgesehen, dass die Veranstaltungsorte mit Zugangslesern zur Erkennung von als Datenträger ausgebildeten Tickets ausgestattet sind, dass die Zugangsleser jedes Veranstaltungsortes mit einem Gebietsserver kommunizieren, welcher eine Datenbank der verkaufbaren Berechtigungen dieses Veranstaltungsortes aufweist, und dass jeder Gebietsserver mit dem Internet als Kommunikationsmedium verbunden ist, wobei Vorverkaufsstellen oder private Nutzer durch Aufruf geeigneter Adressen mit einem Webserver verbunden werden, welcher das verkaufbare Tarifangebot über eine gesicherte Verbindung aus der Datenbank des Gebietsservers abruft und am Bildschirm der Vorverkaufsstelle anzeigt.

Ein wesentlicher Vorteil des erfindungsgemäßen Konzeptes besteht darin, dass Veranstaltungsorte lokal Zutrittssysteme verwalten können, in deren Gebietsservem die verkaufbaren Tickets aktuell in einer Datenbank definiert sind. Ruft eine Vorverkaufsstelle oder ein privater Nutzer die entsprechende Intemetadresse des gewünschten Veranstaltungsortes auf, so verbindet der Webserver mit dem lokalen Gebietsserver und erhält aktuelle Informationen. Die Ticketreservierung und der Ticketverkauf findet praktisch direkt am Gebietsserver statt, die aufwendige Wartung eines zentralen Webservers entflällt.

Wenn nach Auswahl eines Tickets am Bildschirm der Vorverkaufsstelle oder dergleichen geeignete Ticketdaten, beispielsweise eine Veranstaltungsnummer und eine Sitznummer, seitens des Gebietsservers erstellt und über das Internet an die Vorverkaufsstelle übertragen werden und an der Vorverkaufsstelle unter Verwendung der vom Gebietsserver übermittelten Ticketdaten das Ticket codiert wird, so ist damit sowohl Reservierung als auch Verkauf durchgeführt. Der Nutzer erhält direkt eingültiges Ticket, mit dem er die Veranstaltung besuchen kann.

Eine Variante besteht darin, dass nach Auswahl eines Tickets am Bildschirm der Vorverkaufsstelle oder dergleichen die Vorverkaufsstelle eine eindeutige Ticketnummer gemeinsam mit der gewählten Berechtigung an den Gebietsserver übertragen wird, und dass der Gebietsserver die Berechtigungskennzeichen gemeinsam mit der Seriennummer an die Zugangsleser verteilt, sodass ein Ticket mit der eindeutigen Ticketnummer, beispielsweise in Form eines Barcodes, direkt am Zugangsleser erkannt werden kann. Diese Variante ist insbesondere geeignet, um mit im Eigentum des Nutzers stehenden Chipkarten direkt Zugang zu finden. Die Chipkartennummer eignet sich diesbezüglich als Identifikationsnummer der verkauften Berechtigung.

Der Webserver kann beim erstmaligen Aufruf durch eine Vorverkaufsstelle dieser ein Kassenprogramm übertragen, das am lokalen Computer der Vorverkaufsstelle abgespeichert wird. Dieses Kassenprogramm erhält beim Aufruf eines Gebietsservers seine Verkaufsparameter von diesem übertragen. Damit ist es möglich, für verschiedene Veranstaltungen unterschiedliche Kassenoberflächen zu generieren. Die Funktionalität des Kassenprogrammes entsteht erst im Zusammenwirken mit dem Gebietsserver.

Weiter vorteilhaft ist, wenn das Kassenprogramm beim Aufruf eines Gebietsservers ein Kontingent an Tickets übertragen erhält. Damit ist sogar eine beschränkte Notlaufeigenschaft gegeben, das heißt das Kassenprogramm kann auch bei Ausfall der Verbindung zum Internet noch Karten im beschränkten Ausmaß verkaufen. Bei jedem Verkauf wird ein ein Datenabgleich zwischen dem lokalen Kassenprogramm und dem Gebietsserver versucht, welcher gegebenenfalls das vergebene Kontingent wieder auffüllt.

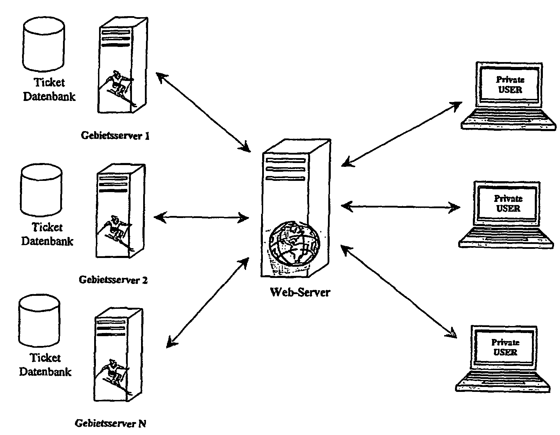

## Patentansprüche

1. Programmlogik zum Verkauf von Berechtigungen für Veranstaltungen oder dergleichen, insbesondere für Tickets aller Art, wobei die verkaufbaren Berechtigungen in Datenbanken definiert sind, und über das Internet seitens einer Vorverkaufsstelle oder eines Käufers ein Zugriff auf die Datenbank für die Reservierung und / oder den Kauf der Berechtigungen erfolgt, wobei die Zugangsleser jedes Veranstaltungsortes mit einem Gebietsserver kommunizieren, welcher eine Datenbank der verkaufbaren Berechtigungen dieses Veranstaltungsortes aufweist, und dass jeder Gebietsserver mit dem Internet als Kommunikationsmedium verbunden ist, wobei Vorverkaufsstellen oder private Nutzer durch Aufruf geeigneter Adressen mit einem Webserver verbunden werden, welcher Webserver das verkaufbare Tarifangebot über eine gesicherte Verbindung aus der Datenbank des Gebietsservers abruft und am Bildschirm der Vorverkaufsstelle anzeigt **dadurch gekennzeichnet, dass** die Veranstaltungsorte mit Zugangslesern zur eindeutigen Erkennung von als Datenträger ausgebildeten Tickets ausgestattet sind.

2. Programmlogik nach Anspruch 1, **dadurch gekennzeichnet, dass** nach Auswahl eines Tickets am Bildschirm der Vorverkaufsstelle oder dergleichen geeignete Ticketdaten, beispielsweise eine Veranstaltungsnummer und eine Sitznummer, seitens des Gebietsservers erstellt und über das Internet an die Vorverkaufsstelle übertragen werden und dass an der Vorverkaufsstelle unter Verwendung der vom Gebietsserver übermittelten Ticketdaten das Ticket codiert wird.

3. Programmlogik nach Anspruch 1, **dadurch gekennzeichnet, dass** nach Auswahl eines Tickets am Bildschirm der Vorverkaufsstelle oder dergleichen die Vorverkaufsstelle eine eindeutige Ticketnummer gemeinsam mit der gewählten Berechtigung an den Gebietsserver übertragen wird, und dass der Gebietsserver die Berechtigungskennzeichen gemeinsam mit der Seriennummer an die Zugangsleser verteilt, sodass ein Ticket mit der eindeutigen Ticketnummer, beispielsweise in Form eines Barcodes, direkt am Zugangsleser erkannt werden kann.

4. Programmlogik nach Anspruch 1, **dadurch gekennzeichnet, dass** die Vorverkaufsstelle oder dergleichen nach Auswahl eines Tickets am Bildschirm der Vorverkaufsstelle die Kennzeichen der Berechtigung gemeinsam mit einer eindeutigen Nummer des Datenträgers an den Gebietsserver übertragen und von dort an die Zugangsleser verteilt werden, sodass das Ticket aufgrund seiner Datenträgernummer direkt am Zugang gelesen und zugelassen werden kann.

5. Programmlogik nach Anspruch 1, **dadurch gekennzeichnet, dass** der Webserver beim erstmaligen Aufruf durch eine Vorverkaufsstelle dieser ein Kassenprogramm überträgt und am lokalen Computer der Vorverkaufsstelle abspeichert, und dass dieses Kassenprogramm beim Aufruf eines Gebietsservers seine Verkaufsparameter von diesem übertragen erhält.

6. Programmlogik nach Anspruch 5, **dadurch gekennzeichnet, dass** das Kassenprogramm beim Aufruf eines Gebietsservers ein Kontingent an Tickets übertragen erhält, und dass bei jedem Verkauf ein Datenabgleich zwischen dem lokalen Kassenprogramm und dem Gebietsserver erfolgt, welcher gegebenenfalls das vergebene Kontingent wieder auffüllt.

## Claims

1. A program logic for selling authorizations for events or the like, especially for tickets of all kinds, with the sellable authorizations being defined in a database and with access being made to the database for the reservation and/or the purchase of the authorizations via the internet by a ticket sales outlet or a purchaser, **characterized in that** the event locations are equipped with access readers for unique recognition of tickets configured as data media, that the access readers of each event location communicate with a regional server which comprises a database of the sellable authorizations for this event location, and that each regional server is connected to the internet as a communication medium, with the ticket sales outlets or private users are connected with a webserver by calling up suitable addresses, which webserver displays the sellable range of offers via a secured connection from the database of the regional server and displays it on the screen of the ticket sales outlet.

2. A program logic in accordance with claim 1, **characterized in that** after the selection of a ticket on the screen of the ticket sales outlet or the like suitable ticket data such as event number and seat number are generated by the regional server and are transmitted via the internet to the ticket sales outlet and that the ticket sales outlet encodes the ticket by using the ticket data sent by the regional server.

3. A program logic in accordance with claim 1, **characterized in that** after the selection of a ticket on the screen of the ticket sales outlet or the like the ticket sales outlet sends a unique ticket number jointly with the chosen authorization to the regional server, and that the regional server distributes the authorization identifiers together with the serial number to the access reader, so that a ticket with the unique ticket number in the form of a bar code for example can be recognized directly on the access reader.

4. A program logic in accordance with claim 1, **characterized in that** the ticket sales outlet or the like transmits the identifiers of the authorization together with a unique number of the data medium to the regional server after the selection of a ticket on the screen of the ticket sales outlet and are distributed from there to the access readers, so that the ticket can be read and admitted directly at the access on the basis of its data medium number.

5. A program logic in accordance with claim 1, **characterized in that** the webserver transmits a cash register program upon the first-time call by a ticket sales outlet and stores the same on the local computer of the ticket sales outlet, and that said cash register program receives its sales parameters from the regional server when calling the same.

6. A program logic in accordance with claim 5, **characterized in that** the cash register program receives a contingent of tickets when calling a regional server and that there is data reconciliation between the local cash register program and the regional server upon each sale, which server may then optionally refill the awarded contingent.

## Revendications

1. Logique de programme pour la vente de droits pour des spectacles ou similaires, en particulier des billets d'entrée de toute sorte, dans laquelle les droits pouvant être vendus sont définis dans des bases de données et un bureau de réservation ou un acheteur accède à la base de données pour la réservation et/ou l'achat en passant par Internet, **caractérisée en ce que** les lieux des manifestations sont équipés de lecteurs d'accès pour une reconnaissance univoque des billets conformés comme des supports de données, **en ce que** les lecteurs d'accès de chaque lieu de manifestation communiquent avec un serveur de zone qui comprend une base de données des droits pouvant être vendus pour ce lieu de manifestation, et **en ce que** chaque serveur de zone est relié avec Internet qui sert de moyen de communication, les bureaux de réservation ou les particuliers utilisateurs étant mis en communication par l'appel d'adresses appropriées avec le serveur Web, lequel consulte les tarifs disponibles dans la base de données par une liaison sécurisée et les affiche à l'écran du bureau de réservation.

2. Logique de programme selon la revendication 1, **caractérisée en ce qu'**après la sélection d'un billet à l'écran du bureau de réservation ou similaire, des données de billet adéquates, par exemple un numéro de manifestation et un numéro de place, sont créées par le serveur de zone et transmis par Internet au bureau de réservation, et **en ce que** le billet est codé dans le bureau de réservation en utilisant les données de billet transmises par le serveur de zone.

3. Logique de programme selon la revendication 1, **caractérisée en ce qu'**après la sélection d'un billet sur l'écran du bureau de réservation ou similaire, le bureau de réservation transmet un numéro de billet univoque ainsi que le droit sélectionné au serveur de zone, et **en ce que** le serveur de zone distribue les codes de droits en même temps que les numéros de série aux lecteurs d'accès, de sorte qu'un billet portant le numéro de billet univoque, par exemple sous la forme d'un code à barres, peut être directement reconnu par le lecteur d'accès.

4. Logique de programme selon la revendication 1, **caractérisée en ce que** le bureau de réservation ou similaire transmet, après la sélection d'un billet à l'écran du bureau de réservation, le code du droit ainsi qu'un numéro univoque du support de données au serveur de zone, qui distribue ceux-ci aux lecteurs d'accès, de sorte que le billet est lu et accepté directement à l'accès à partir de son numéro de support de données.

5. Logique de programme selon la revendication 1, **caractérisée en ce que** lors du premier appel par un bureau de réservation, le serveur Web transmet à celui-ci un programme de caisse et le mémorise sur l'ordinateur local du bureau de réservation, et **en ce que** ce programme de caisse reçoit lors de l'appel d'un serveur de zone des paramètres de vente transmis par celui-ci

6. Logique de programme selon la revendication 5, **caractérisée en ce que** le programme de caisse reçoit lors de l'appel du serveur de zone un contingent de billets, et **en ce que** lors de chaque vente, une comparaison des données a lieu entre le programme de caisse local et le serveur de zone, lequel complète le cas échéant le contingent attribué.
